# EUROPÄISCHE PATENTSCHRIFT

(11) **EP 0 877 986 B1**
(45) Veröffentlichungstag und Bekanntmachung des Hinweises auf die Patenterteilung: **19.04.2000**
(21) Anmeldenummer: 97907033.1
(22) Anmeldetag: 29.01.1997
(51) Int. Cl.: G06F 17/30, H04L 29/06

(54) **VERFAHREN ZUM AUFTEILEN EINES ELEKTRONISCHEN DOKUMENTS FÜR EIN NETZWERKINFORMATIONSSYSTEM MIT HILFE EINES RECHNERS**
COMPUTER-ASSISTED METHOD OF SEGMENTING AN ELECTRONIC DOCUMENT FOR A NETWORK DATA SYSTEM
PROCEDE DE REPARTITION D'UN DOCUMENT ELECTRONIQUE POUR UN SYSTEME D'INFORMATION DE RESEAU A L'AIDE D'UN ORDINATEUR

(30) Priorität: 02.02.1996 DE 19603807
(43) Veröffentlichungstag der Anmeldung: 18.11.1998
(73) Patentinhaber: SIEMENS AKTIENGESELLSCHAFT, 80333 München (DE)
(72) Erfinder: FETIH, Evelyn, D-82024 Taufkirchen (DE); PIEH, Odile, D-81667 München (DE)
(86) Internationale Anmeldenummer: DE9700176
(87) Internationale Veröffentlichungsnummer: WO9728497

(56) Entgegenhaltungen:
- EP-A- 0 501 770
- COMPUTER NETWORKS AND ISDN SYSTEMS, Bd. 27, 1.Januar 1994, Seiten 205-214, XP000571730 ROUSSEAU B ET AL: "WRITING DOCUMENTS FOR PAPER AND WWW A STRATEGY BASED ON FRAMEMAKER AND WEBMAKER"
- COMPUTER NETWORKS AND ISDN SYSTEMS, 1.November 1994, HOUSTON, XP002038112 EICHMANN, MCGREGOR, DANLEY: "Integrating structured databases into the Web: The MORE system"
- COMPUTER NETWORK AND ISDN SYSTEMS, 1.April 1995, KAISERSLAUTERN, XP002038113 BAENTSCH, MOLTER, STURM: "WebMake: Integrating distributed software development in a structure-enhanced Web"
- COMPUTER NETWORKS AND ISDN SYSTEMS, Bd. 28, Nr. 1/02, 1.Dezember 1995, Seiten 61-68, XP000542207 SLATER A F: "EXTENDING W3 CLIENTS"

## Beschreibung

Die Erfindung betrifft ein Verfahren, welches im Rahmen eines Netzwerkinformationssystems zur Aufteilung elektronischer Dokumente eingesetzt wird.

Als Netzwerkinformationssystem wird im Rahmen dieser Erfindung beispielsweise das sogenannte World Wide Web (WWW), das Wide Area Information Server System (WAIS), oder auch das Gopher-System verstanden.

Aufgabe der Netzwerkinformationssysteme ist es, elektronisch abgespeicherte Dokumente in multimedialer Form über und durch Rechner einem Benutzer zugänglich zu machen.

Bei der Nutzbarkeit der elektronischen Dokumente für den Benutzer steht der Aspekt der Benutzerfreundlichkeit häufig im absoluten Vordergrund. Benutzerfreundlichkeit bedeutet in diesem Zusammenhang, daß innerhalb eines Dokuments der Benutzer auf sehr einfache Art und Weise in der Lage sein muß, von ihm gesuchte Information innerhalb dieses elektronischen Dokuments schnell aufzufinden. Weiterhin ist es Ziel der Netzinformationssysteme, die Informationen übersichtlicher und in möglichst leicht verständlicher Form dem Benutzer zugänglich zu machen.

Aus dem Dokument [1] ist es bekannt, im Rahmen des Netzwerkinformationssystems Word-Wide-Web (WWW) über eine sog. Hyper-Text-Markup-Language (HTML) frei wählbare Teile des elektronischen Dokuments zu markieren und bei Auswahl dieser markierten Teile des elektronischen Dokuments durch den Benutzer definierbare Aktionen durchzuführen. Hierbei ist es in der HTML vorgesehen, beispielsweise ein Wort des elektronischen Dokuments in der Weise zu markieren, daß durch Auswahl dieses Begriffes durch den Benutzer direkt zu einem anderen als dem aktuell dem Benutzer dargestellten Abschnitt verzweigt wird und dieser andere Abschnitt dem Benutzer dann dargestellt wird. Damit wird ein "Springen" innerhalb des Dokumentes abhängig von vorgebbaren Begriffen möglich. Es ist jedoch bisher lediglich bekannt, abhängig von Begriffen zu einem bestimmten Abschnitt des Dokumentes zu verzweigen. Die Verzweigung erfolgt in der Weise, daß ausgehend von dem neuen Verzweigungspunkt das Dokument dem Benutzer jeweils bis zum Ende des gesamten darzustellen elektronischen Dokumentes dargestellt wird.

Durch diese Vorgehensweise wird eine flexible Handhabung einzelner, bestimmter auswählbarer Teile des Dokumentes nicht erreicht, da keine unabhängigen Teile existieren, sondern immer nur "Sprungadressen" innerhalb des elektronischen Dokuments, ab dem jeweils das restliche elektronische Dokument dargestellt wird.

Weiterhin wird durch das bekannte Verfahren dem Benutzer nicht in übersichtlicher Weise dargestellt, wann der Abschnitt, der sich auf den zuvor ausgewählten Begriff bezieht, beendet ist. Dies führt möglicherweise zu weniger zielgerichteter Auswertung des elektronischen Dokumentes durch den Benutzer, da dieser unter Umständen unnötige Teile des elektronischen Dokumentes liest.

Auch eine komplexere Art der Darstellung, beispielsweise das Zusammenfassen mehrerer, nicht direkt nacheinander sich befindender Teile des elektronischen Dokumentes unter einem Suchbegriff, das heißt einem durch den Benutzer auswählbaren Begriff, ist durch das bekannte Verfahren nicht möglich.

Folglich ist das bekannte Verfahren unflexibel, unübersichtlich und für den Benutzer schlecht handhabbar.

Somit liegt der Erfindung das Problem zugrunde, ein Verfahren zum Aufteilen eines elektronischen Dokumentes für ein Netzwerkinformationssystem anzugeben, welches eine flexible, übersichtliche und gut handhabbare Auswertung elektronischer Dokumente durch einen Benutzer ermöglicht.

Das Problem wird durch das Verfahren gemäß Patentanspruch 1 gelöst.

Bei dem erfindungsgemäßen Verfahren werden für das gegebene elektronische Dokument Anwendungsaspekte bestimmt. Bei der Aufteilung des Dokuments in Teildokumente werden diese berücksichtigt. Auf diese Weise und durch Definition automatischer Zuordnungen zwischen den Anwendungsaspekten und den Teildokumenten wird eine flexible Handhabbarkeit des elektronischen Dokumentes durch den Benutzer möglich.

Weiterhin wird durch die Unabhängigkeit der Teildokumente voneinander erreicht, daß auch komplexere Anwendungsaspekte, die beispielweise ein Darstellen mehrerer Teildokumente, die innerhalb des gesamten Dokumentes nicht direkt hintereinander angeordnet sind, notwendig machen, möglich werden.

Dadurch, daß die Teildokumente einen klar abgegrenzten Anfang und ein klar abgegrenztes Ende aufweisen, wird auch die Bearbeitung des Dokumentes durch den Benutzer übersichtlicher, da jeweils nur die Teile des Dokumentes tatsächlich dem Benutzer dargestellt werden, die sich auf den ursprünglichen Verzweigungspunkt, also den gesuchten, von dem Benutzer ausgewählten Begriff, beziehen.

Vorteilhafte Weiterbildungen der Erfindung ergeben sich aus den abhängigen Ansprüchen.

Es ist vorteilhaft, das Verfahren einzusetzen in einem elektronischen Dokument, das mindestens ein Software-Entwicklungs-Muster (Patterns) aufweist.

Ein Ausführungsbeispiel darstellende Figuren werden im Folgenden näher erläutert.

Es zeigen
Figur 1 eine Anordnung mehrerer Rechner, die über ein Netzwerk gekoppelt sind, in denen ein Netzwerkinformationssystem verwendet wird;
Figur 2 eine Skizze, in der die Aufteilung mehrerer elektronischer Dokumente in Teildokumente und verschiedene Zuordnungen von Anwendungsaspekten auf die Teildokumente beschrieben sind;
Figur 3 ein Ablaufdiagramm, in dem die einzelnen Verfahrensschritte des erfindungsgemäßen Verfahrens beschrieben sind;
Figur 4 ein Blockdiagramm, in dem verschiedene Realisierungsmöglichkeiten des Netzwerkinformationssystems dargestellt sind;
Figur 5 ein Blockdiagramm, in dem verschiedene, mögliche Anwendungsaspekte dargestellt sind.

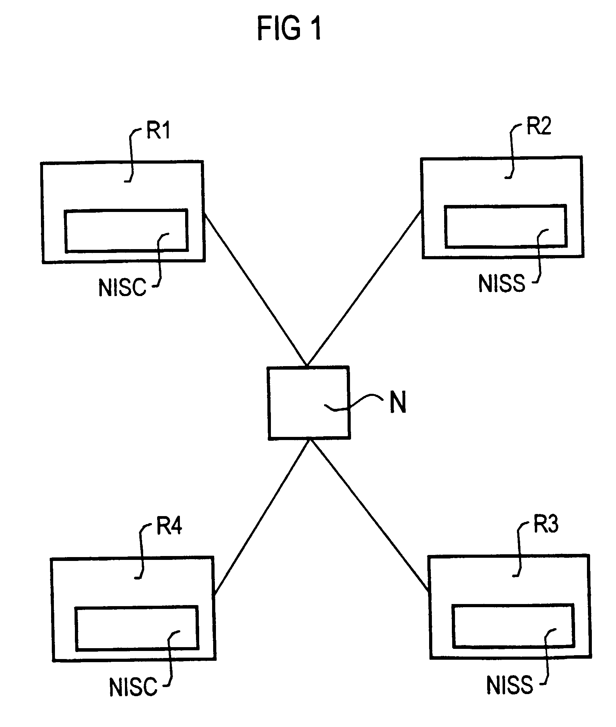

Anhand der Figuren 1 bis 5 wird das erfindungsgemäße Verfahren weiter erläutert.

In Figur 1 ist eine Anordnung mehrerer Rechner dargestellt, die über ein Netzwerk N, beispielsweise dem sogenannten Internet, miteinander gekoppelt sind. Die Rechner sind in einer Weise konfiguriert, daß mindestens ein NetzwerkinformationsSystem NIS verfügbar ist.

Hierbei fungieren ein erster Rechner R1 und ein vierter Rechner R4 als Netzwerkinformationssystem-Klienten NISC, durch die Information von einem Benutzer abgefragt, bzw. einem Benutzer dargestellt wird.

Ein zweiter Rechner R2 und ein dritter Rechner R3 fungieren als Netzwerkinformationssystem-Server NISS, durch die der Zugriff auf das eigentliche Netzinformationssystem NIS ermöglicht wird.

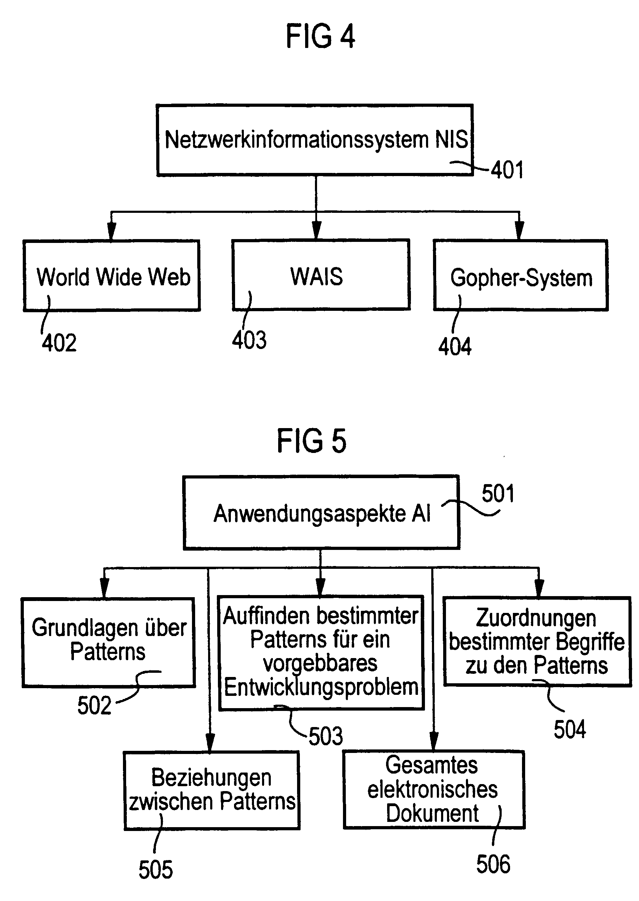

Verschiedene Netzwerkinformationssysteme NIS sind dem Fachmann geläufig 401, beispielsweise das sogenannte World-Wide-Web 402 (WWW), das WAIS 403, sowie das Gopher-System 404 (vgl. Figur 4). Diese Netzwerkinformationssysteme NIS sind in [1] beschrieben.

Durch das Netzwerkinformationssystem NIS ist es möglich, elektronische Dokumente, die beispielsweise Text, Bilder, Bildersequenzen, Sprache, usw. aufweisen, und in einem Rechner gespeichert sind, über Netzwerkinformationssystem-Klienten NISC, dem Benutzer zugänglich zu machen.

Dies geschieht dadurch, daß der Benutzer die Suche nach einem elektronischen Dokument in dem Netzwerkinformationssystem-Klienten NISC eingibt. In dem Netzwerkinformationssystem-Klienten NISC wird diese Eingabe in eine Anfrage umgewandelt. Diese Anfrage wird an dem Netzinformationssystemserver NISS gesendet. In dem Netzinformationssystemserver NISS ist das elektronische Dokument entweder direkt in einem Speicher des Rechners gespeichert, oder es ist eine Referenz auf den Ort gespeichert, an dem das gesuchte elektronische Dokument verfügbar ist.

In einer an den Netzwerkinformationssystem-Klienten NISC gesendeten Antwort wird das gesuchte elektronische Dokument von dem Netzwerkinformationssystem-Server NISS übertragen.

Im weiteren wird als Netzwerkinformationssystem NIS das World Wide Web WWW zur Erläuterung angenommen.

Das im weiteren beschriebenen erfindungsgemäße Verfahren ist jedoch in keinster Weise auf das World Wide Web WWW beschränkt, sondern kann auch auf alle weiteren, dem Fachmann bekannten Netzwerkinformationssysteme NIS angewendet werden.

In dem World Wide Web WWW erfolgt die Kommunikation zwischen dem Netzwerkinformationssystemclienten NISC und dem Netzwerkinformationssystemserver NISS nach dem sogenannten Hyper Text Transfer Protocoll (HTTP). Grundlagen über das World Wide Web WWW sind in dem Dokument [2] zu finden.

Das Verfahren kann besonders vorteilhaft eingesetzt werden bei der Aufteilung eines elektronischen Dokumentes, welches mindestens ein Software-Entwicklungs-Modell (Pattern) aufweist. Bei einem Software-Entwicklungs-Modell werden immer wiederkehrende Entwicklungsprobleme, die in spezifischen Entwicklungssituationen auftreten, beschrieben und für diese Entwicklungsprobleme Lösungsmodelle dargestellt. Grundlagen über Software-Entwicklungs-Modelle (Pattern) sind in [3] beschrieben.

Zur einfacheren Erläuterung des erfindungsgemäßen Verfahrens wird im weiteren davon ausgegangen, daß das elektronische Dokument mindestens ein Software-Entwicklungs-Modell aufweist. Dies bedeutet jedoch in keinster Weise, daß nicht weitere Informationen in dem elektronischen Dokument enthalten sein können. Auch schließt es die Anwendbarkeit des erfindungsgemäßen Verfahrens auf elektronische Dokumente, die keine Patterns aufweisen, in keinster Weise aus.

Ein Pattern hat einen festgelegten Aufbau, der im folgenden kurz beschrieben wird.

In einem Pattern wird zu Beginn üblicherweise eine Kurzbeschreibung vorteilhafter Anwendungsgebiete des jeweiligen Patterns beschrieben. Darauf folgt ein konkretes Beispiel für das jeweilige Pattern.

Nach der Beschreibung des Kontextes, im Rahmen dessen das Pattern angewendet wird, wird das dem Pattern zugrundliegende Entwicklungsproblem dargestellt. Anschließend wird die durch das Software-Entwicklungs-Modell entwickelte Lösung beschrieben.

Weiterhin wird anhand einiger Beispiele das dynamische Verhalten des Software-Entwicklungs-Modells beschrieben.

Anschließend wird die Vorgehensweise zur Implementierung des jeweiligen Patterns dargestellt. Diese Implementierung wird anhand eines Beispiels anschließend noch einmal detailliert dargestellt. Existieren Varianten des Software-Entwicklungs-Modells bzw. der Implementierung des Software-Entwicklungs-Modells, werden diese nun beschrieben.

Auch werden alle bekannten Anwendungsgebiete, für die das jeweilige Pattern verwendbar ist, anschließend dargestellt.

Anschließend werden besondere Vorteile, die das jeweilige Pattern aufweist, dargelegt.

In einem abschließenden Abschnitt des jeweiligen Patterns werden einige Einschränkungen bzw. Nachteile des jeweiligen Patterns in bestimmten Anwendungsgebieten beschrieben.

Diese Strukturierung eines Patterns bzw. des elektronischen Dokumentes ist zwar zur Darlegung des Ausführungsbeispiels hilfreich, schränkt jedoch die Allgemeingültigkeit des Verfahrens in keinster Weise ein, da die im folgenden erläuterte Aufteilung des elektronischen Dokuments ja auch auf alle anderen Formen elektronischer Dokumente anwendbar ist.

In dem World Wide Web WWW wird der Aufbau des jeweiligen elektronischen Dokumentes durch die Hyper-Text-Markup-Language (HTML) beschrieben. Weiterhin ist es in dem World Wide Web (WWW) vorgesehen, bestimmte Worte oder Abschnitte des elektronischen Dokumentes zu markieren, was zur Folge hat, daß bei Auswählen des Abschnittes bzw. des markierten Begriffs eine vorgebbare Aktion durchgeführt wird. Die Auswahl kann beispielsweise durch einfaches Anklicken der Maus des Benutzers auf den jeweiligen auf dem Bildschirm dargestellten Text des elektronischen Dokumentes erfolgen.

Die Aktionen, die durch die Auswahl des markierten Begriffs bzw. markierten Abschnittes verursacht werden, können in einem sogenannten Common Gateway Interface Script (CGI) frei wählbar definiert werden.

Grundlagen über die Hyper Text Markup Language (HTML) sind in [4] beschrieben.

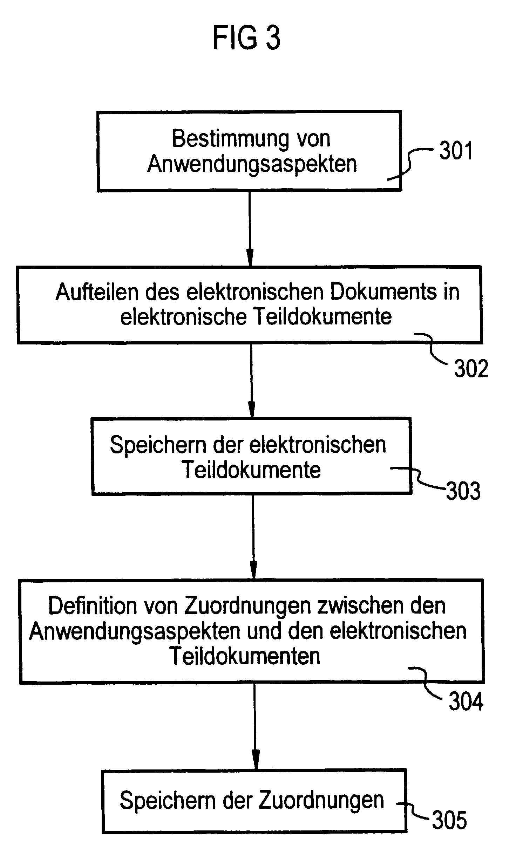

Spezielle Realisierungen des erfindungsgemäßen Verfahrens in Form von CGI-Skripten werden im weiteren noch detailliert beschrieben. Ein Ablaufdiagramm, welches in Figur 3 dargestellt ist, beschreibt die einzelnen Verfahrensschritte des erfindungsgemäßen Verfahrens.

In einem ersten Schritt 301 werden Anwendungsaspekte bestimmt.

Eine Übersicht über mögliche Anwendungsaspekte, die in dem erfindungsgemäßen Verfahren berücksichtigt werden können, sind in Figur 5 in einer nicht abschließenden Aufzählung dargestellt.

Anwendungsanspekte 501 sind beispielsweise:
- Allgemeine Grundlagen über die Software-Entwicklungs-Modelle 502;
- Aspekte zum Auffinden bestimmter Patterns für ein vorgebbares Entwicklungsproblem 503;
- Aspekte für Zuordnungen bestimmter Begriffe zu den einzelnen Patterns 504;
- Aspekte, die Beziehungen zwischen den einzelnen Patterns beschreiben 505;
- Darstellung des elektronischen Dokuments als Ganzes 506.

Grundlagen über Patterns 502:
Bei diesem Anwendungsaspekt werden allgemeine Grundlagen bezüglich Patterns und Patternsystemen in der Softwarearchitektur berücksichtigt.

Aufwenden bestimmter Patterns für ein vorgebbares Entwicklungsproblem 503:
Dieser Anwendungsaspekt berücksichtigt die Suche eines oder mehrerer Patterns für ein vorgebbares Entwicklungsproblem. Das Auffinden kann hierbei unterstützt werden durch Suchmechanismen, die in allgemein verfügbaren sog. World Wide Web - Browsern verfügbar sind oder auch durch Listen von Schlüsselworten, Kontextkategorien, Beziehungen zwischen den Patterns, usw.

Zuordnung bestimmter Begriffe zu den Patterns 504:
Über diesen Anwendungsaspekt wird es ermöglicht, daß der Benutzer bestimmte Begriffe auf effiziente Weise in den Patterns wiederfindet.

Beziehungen zwischen Patterns 505:
Dieser Anwendungsaspekt berücksichtigt existierende Beziehungen zwischen Patterns und verbessert bei dessen Berücksichtigung bei der Aufteilung des elektronischen Dokuments die Übersichtlichkeit des gesuchten elektronischen Dokuments erheblich.

Ein weiterer Anwendungsaspekt ist in der Darstellung des elektronischen Dokumentes als Ganzes zu sehen 506.

Weitere Anwendungsaspekte sind abhängig von der jeweiligen Anwendung und dem elektronischen Dokument bzw. der Art des elektronischen Dokuments. Diese sind dem Fachmann bekannt und auch im Rahmen des erfindungsgemäßen Verfahrens ohne weiteres einsetzbar.

In einem weiteren Schritt 302 wird das elektronische Dokument in mehrere unabhängige Teildokumente Tij aufgeteilt.

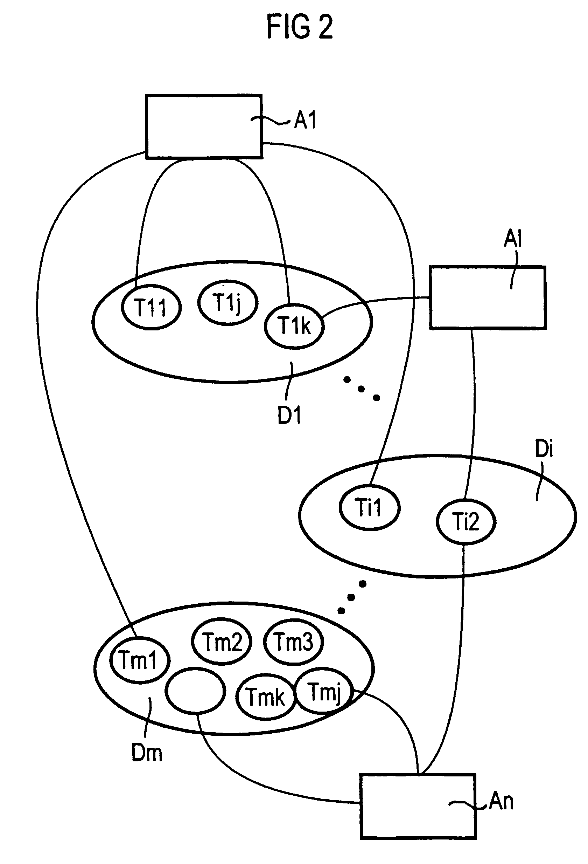

Dieses Vorgehen ist in Figur 2 dargestellt, jedoch für den Fall mehrerer elektronischer Dokumente Di, wobei ein Index i eine natürliche Zahl zwischen 1 und m ist und m die Anzahl der gespeicherten elektronischen Dokumente Di angibt.

Unter Berücksichtigung der einzelnen Anwendungsaspekte Al mit einem Index 1, der eine natürliche Zahl zwischen 1 und n ist, wobei n die Anzahl der berücksichtigten Anwendungsaspekte Al bei der Aufteilung der elektronischen Dokumente Di angibt, wird das elektronische Dokument in mehrere unabhängige Teildokumente Tij aufgeteilt.

Die einzelnen Teildokumente Tij werden eindeutig durch den Index i, der das jeweilige Dokument Di angibt, zu dem das Teildokument Tij gehört, sowie einem weiteren Index j, einer natürlichen Zahl zwischen 1 und k, wobei k die Anzahl der Teildokumente in dem jeweiligen elektronischen Dokument Di ist, gekennzeichnet.

Die Berücksichtigung der Anwendungsaspekte Al erfolgt in der Weise, daß durch die Aufteilung der elektronischen Dokumente Di eine Definition von Zuordnungen, die im weiteren beschrieben werden, in flexibler, übersichtlicher und leichter Weise durchgeführt werden kann.

Nachdem die Aufteilung des elektronischen Dokumente, bzw. der elektronischen Dokumente Di erfolgte, werden die elektronischen Teildokumente Tij gespeichert 303.

Anschließend werden Zuordnungen Zq zwischen den Anwendungsaspekten Al und den gespeicherten elektronischen Teildokumenten Tij definiert 304.

Die elektronischen Teildokumente Tij sind voneinander völlig unabhängig, so daß die einzelnen elektronischen Teildokumente Tij in beliebiger Weise und Reihenfolge kombiniert werden können und dem Benutzer dargestellt werden können.

Durch diese Vorgehensweise ist eine sehr übersichtliche Art der Verfügbarmachung von elektronischen Dokumenten Di möglich.

Die einzelnen Zuordnungen Zq weisen also eine Folge von Teildokumenten Tij auf, die sich daraus ergeben, daß je nach Anwendungsaspekt Al durch Wahl dieses Anwendungsaspekts Al durch den Benutzer, diesem Benutzer die Folge von abgeschlossenen, unabhängigen Teildokumenten Tij dargestellt werden.

Diese Zuordnungen werden in einem letzten Schritt 305 gespeichert.

Ein Beispiel für eine Aufteilung eines Patterns in unabhängige Teildokumente Tij für ein Dokument Ti ist beispielsweise darin zu sehen, daß
- ein erstes Teildokument Ti1 sich ergibt aus der Kurzbeschreibung des Patterns und dem Beispiel,
- ein zweites Teildokument Ti2 sich ergibt aus einer Kombination des Kontextes, der Problemdarstellung sowie der Problemlösung und der Struktur,
- ein drittes Teildokument Ti3 sich ergibt aus einem ersten Szenario des Patterns,
- ein viertes Teildokument Ti4 sich ergibt aus einem zweiten Szenario,
- ein fünftes Teildokument Ti5 sich ergibt aus einem dritten Szenario,
- fortlaufend neue unabhängige Teildokumente sich ergeben bis zu der jeweiligen Anzahl beschriebener Szenarien für das jeweilige Pattern,
- ein sechstes Teildokument Ti6 sich ergibt aus der Beschreibung der Implementierung des jeweiligen Patterns auf, sowie aus einem detaillierten Beispiel zur Beschreibung der Implementierung, wenn ein solches vorhanden ist,
- ein siebtes Teildokument Ti7 sich ergibt aus den einzelnen Varianten des Patterns,
- ein achtes Teildokument Ti8 sich ergibt aus verschiedenen Anwendungsbereichen für das Pattern,
- ein neuntes Teildokument Ti9 sich ergibt aus den Vorteilen des jeweiligen Patterns, und
- ein zehntes Teildokument Ti10 sich ergibt aus Einschränkungen bzw. Nachteilen des jeweiligen Patterns.

Diese Möglichkeit der Aufteilung des Dokuments Di für den Fall, daß das jeweilige elektronische Dokument Di mindestens ein Pattern aufweist, schränkt jedoch das erfindungsgemäße Verfahren in keinster Weise auf die beschriebenen Aufteilungen der elektronischen Dokumente Di in die einzelnen Teildokumente Tij ein.

Weitere Anwendungsaspekte Al zur Aufteilung der elektronischen Dokumente Di sind dem Fachmann je nach Anwendung und je nach elektronischen Dokument Di geläufig und können ohne Einschränkungen in dem erfindungsgemäßen Verfahren eingesetzt werden.

Im weiteren sind in Form von CGI-Scripts Beispiele von Aktionslisten für die Zuordnungen Zq beschrieben.

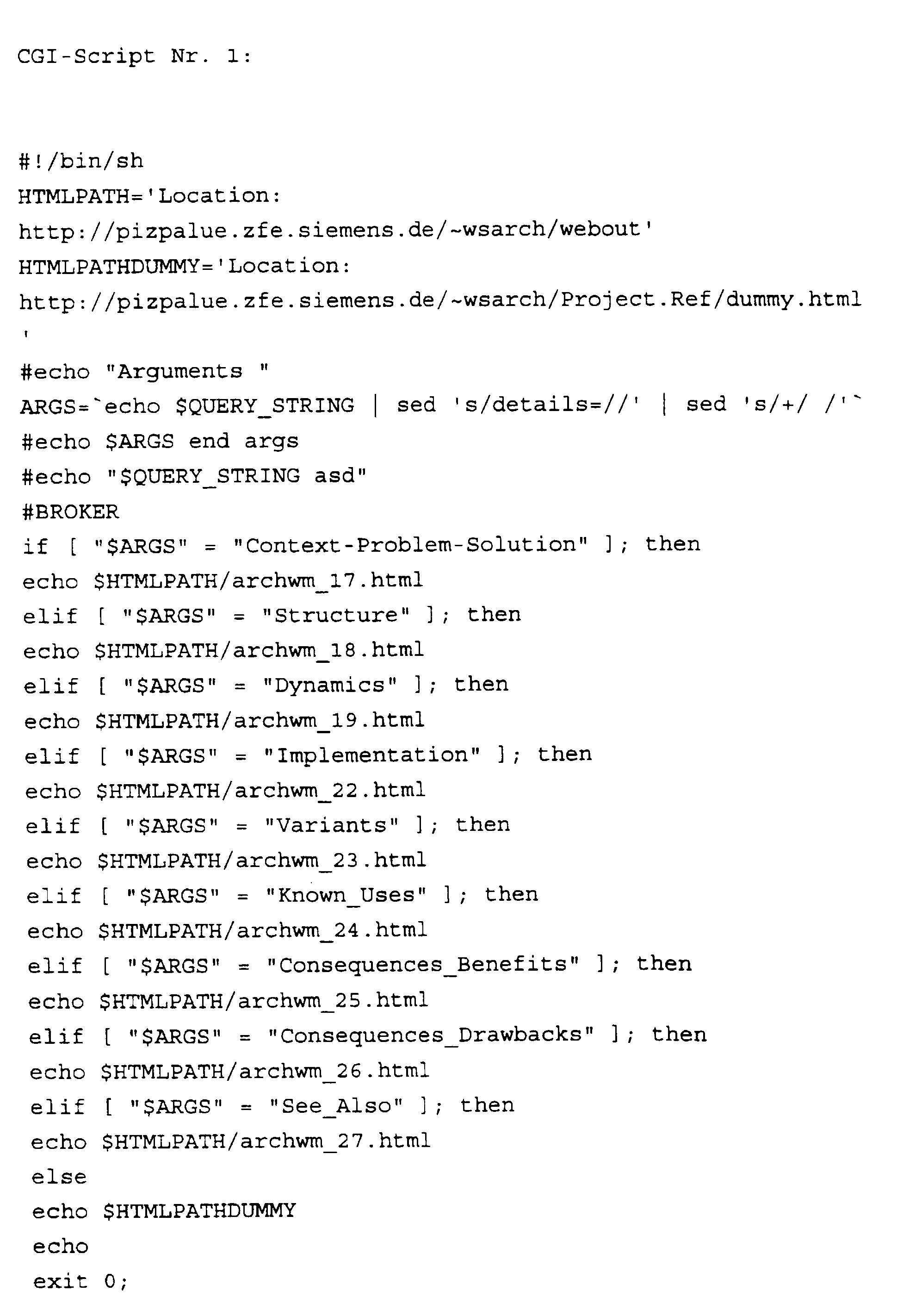

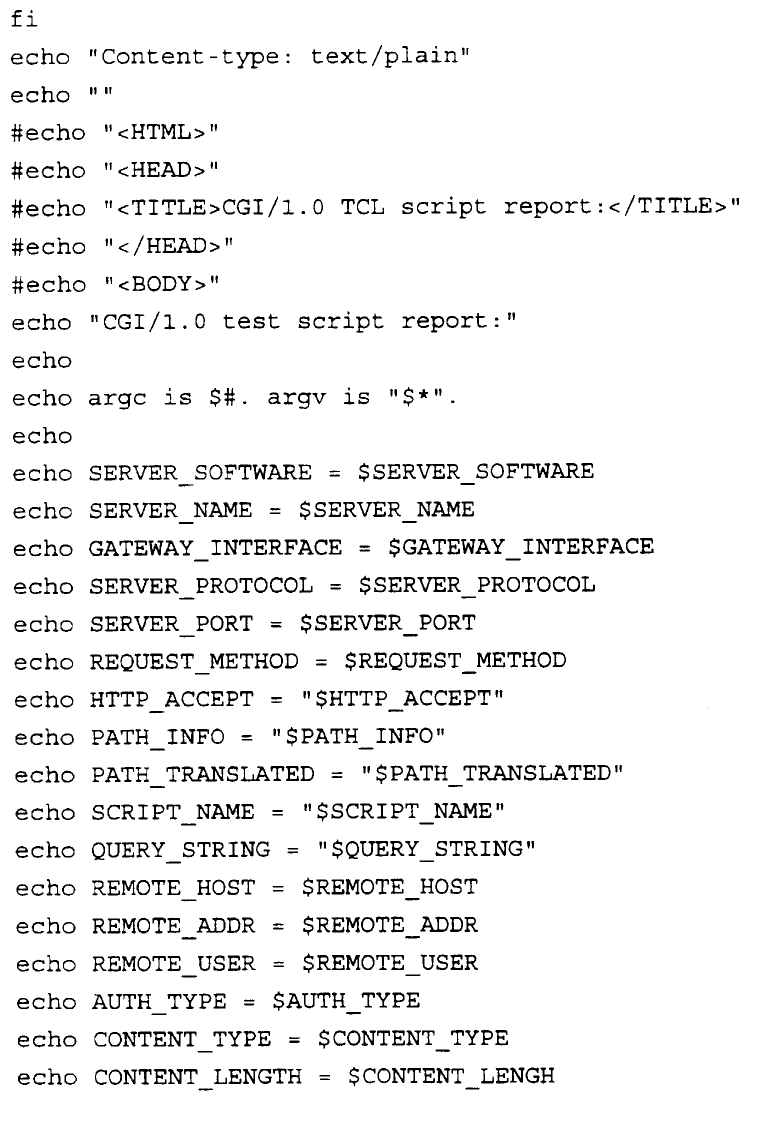

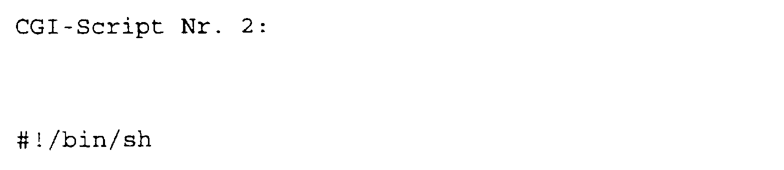

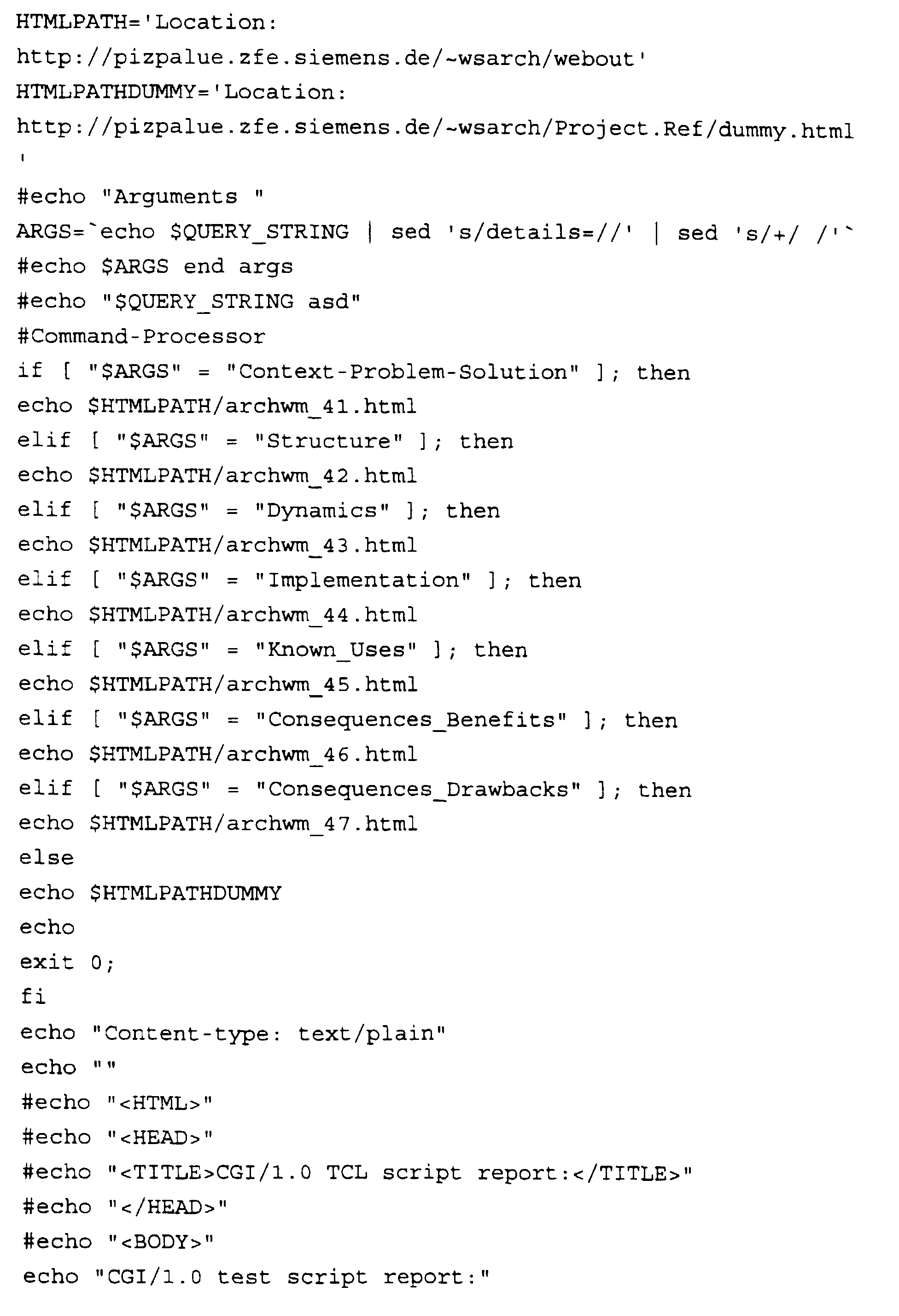

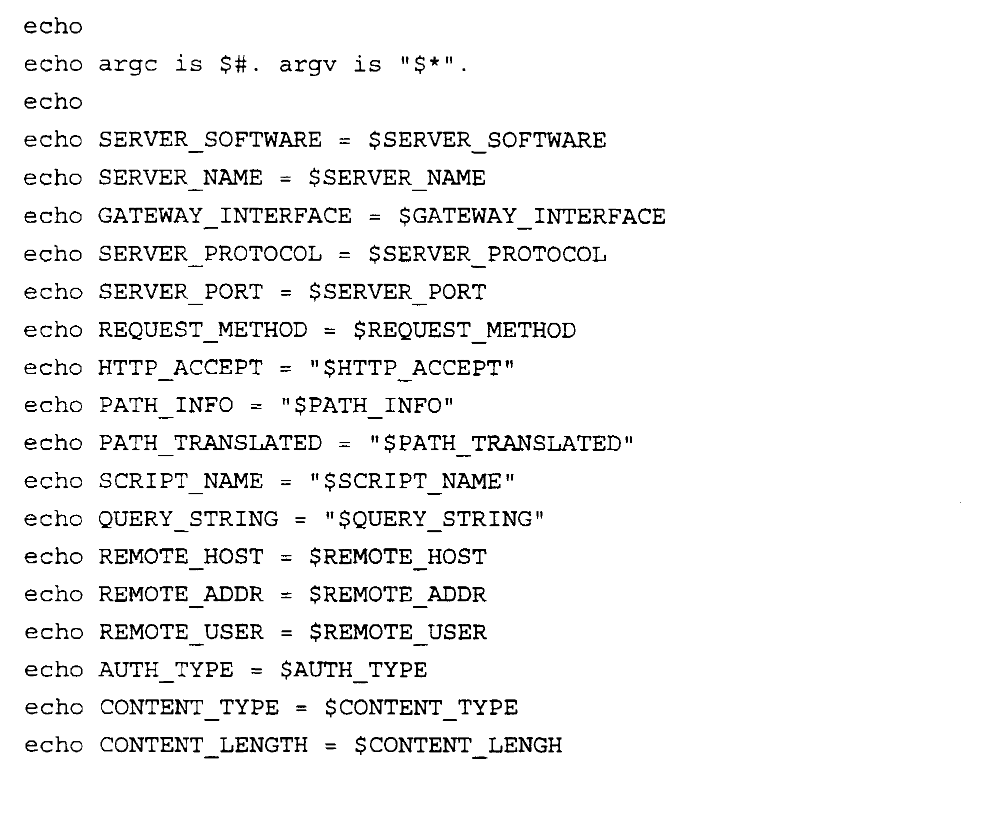

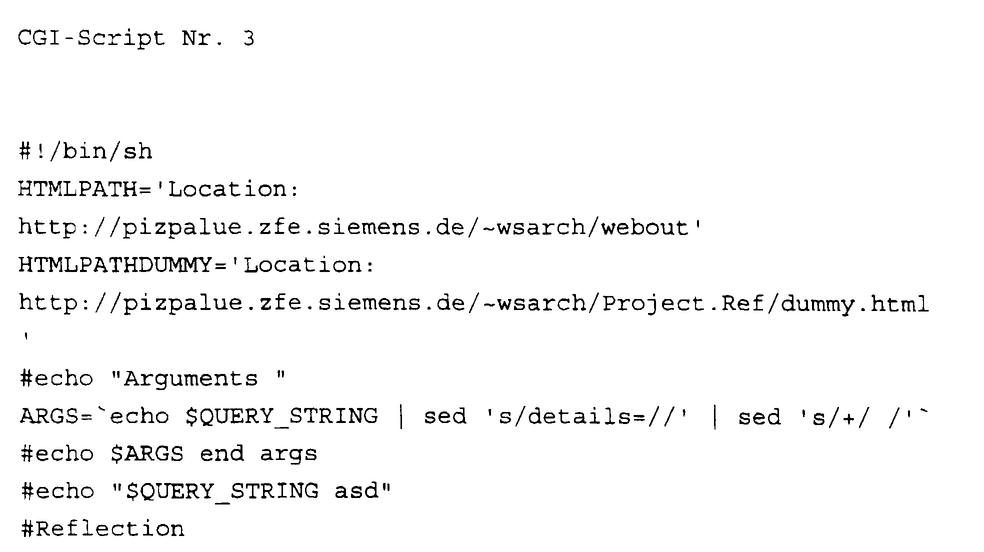

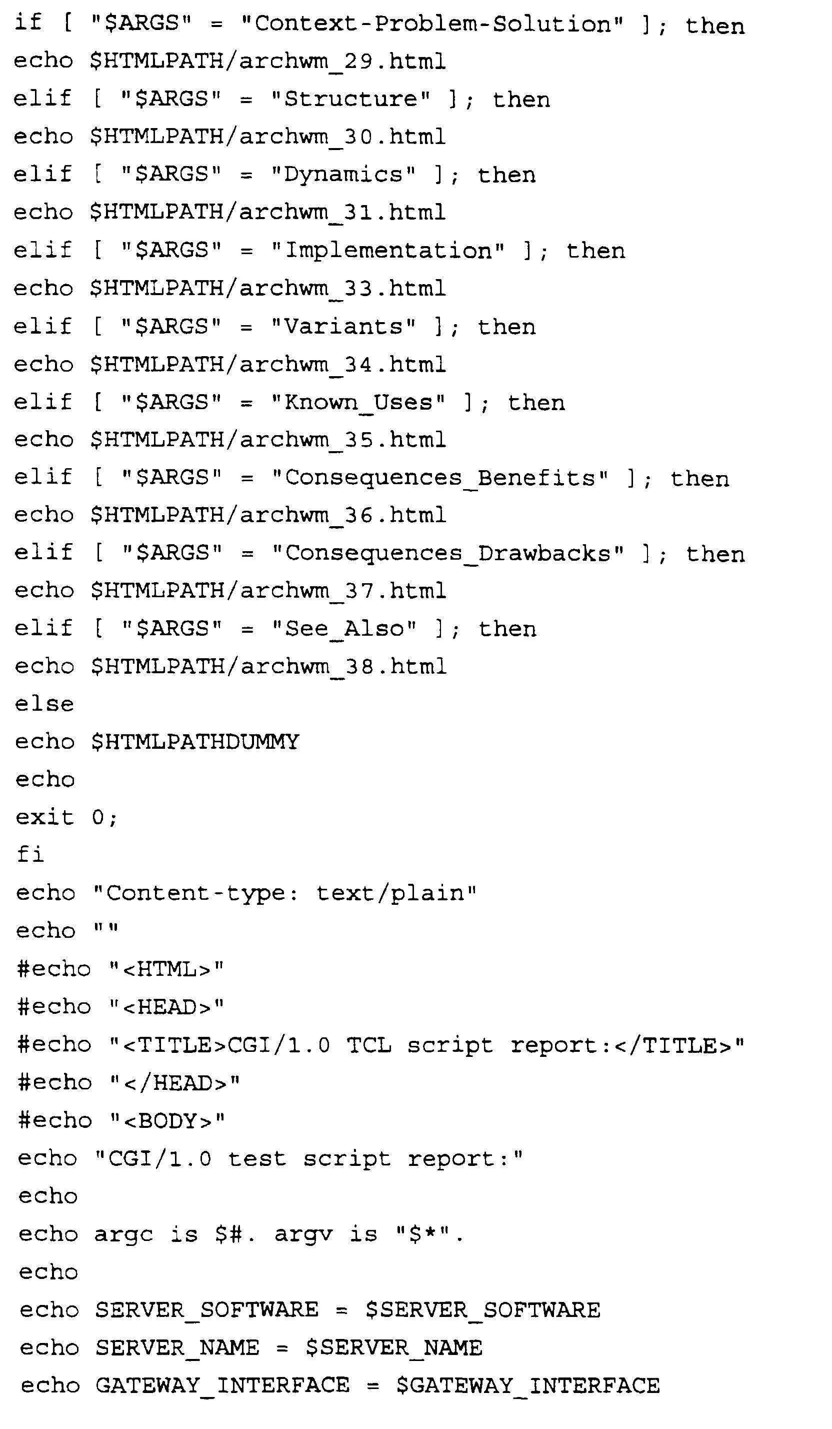

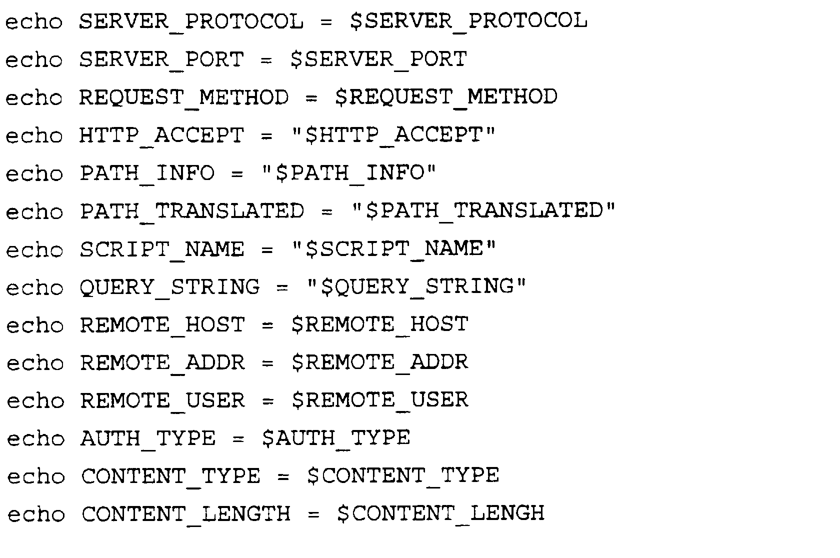

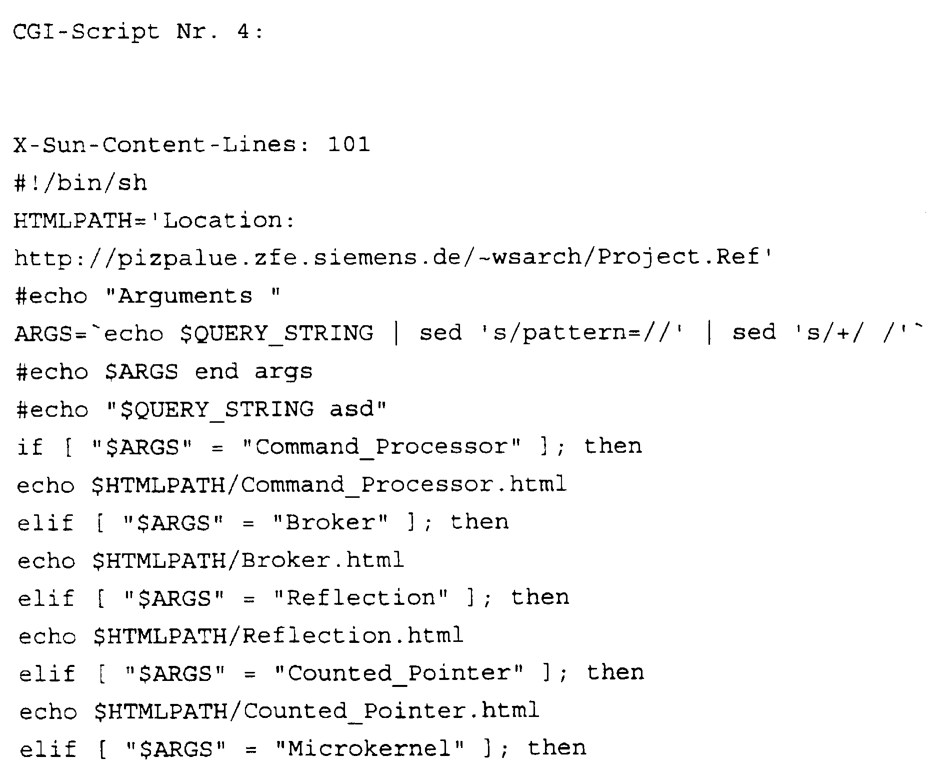

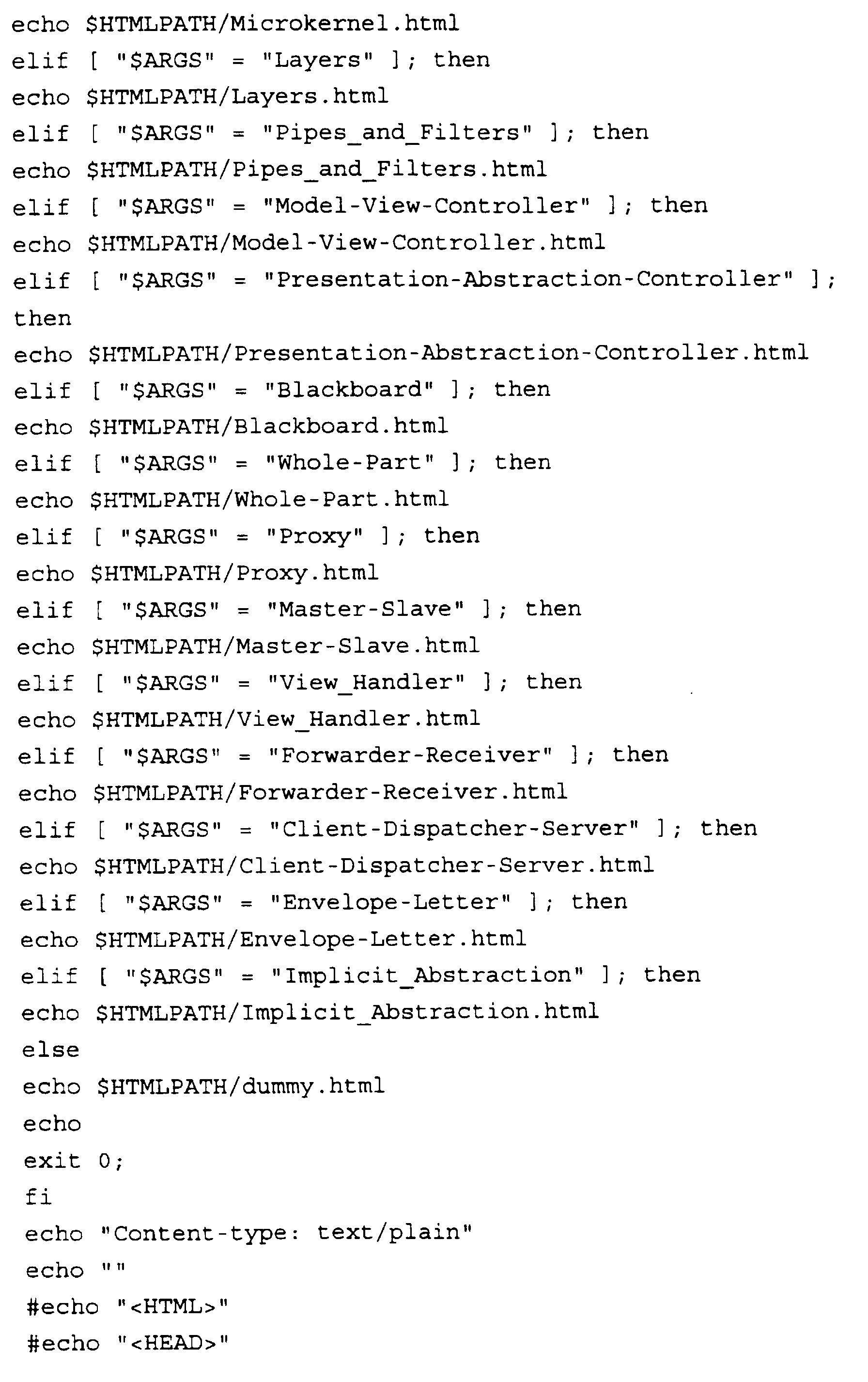

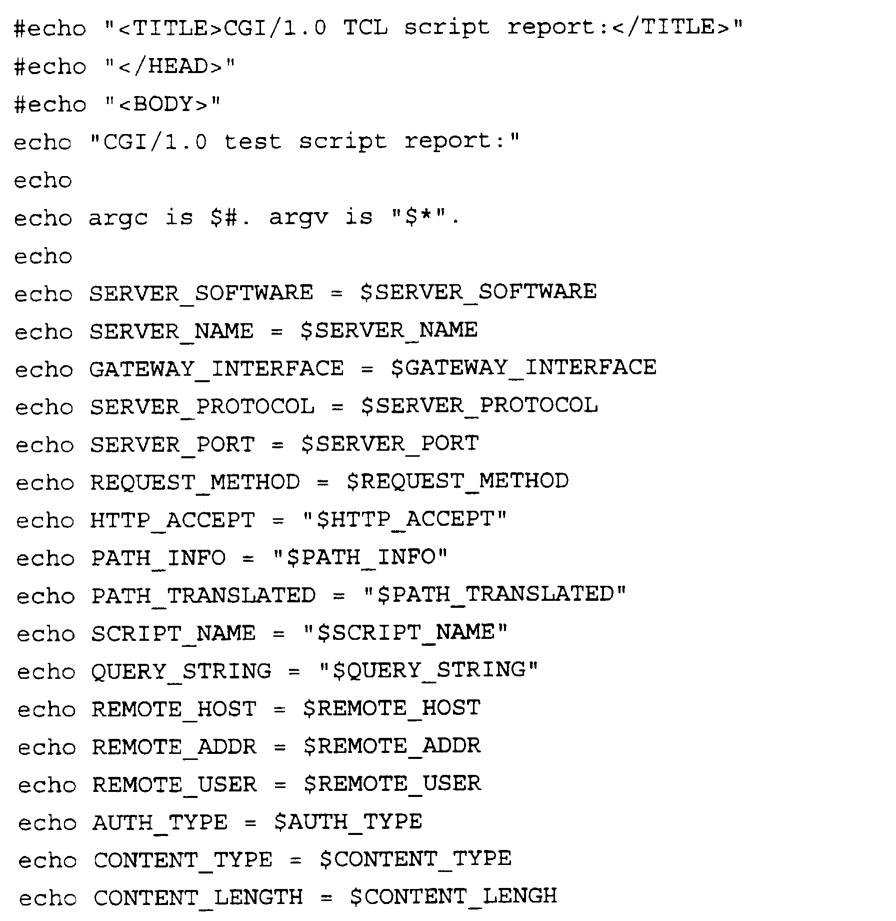

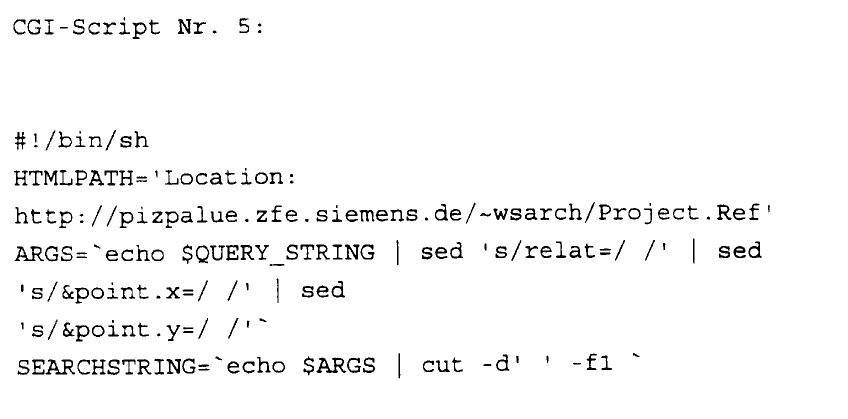

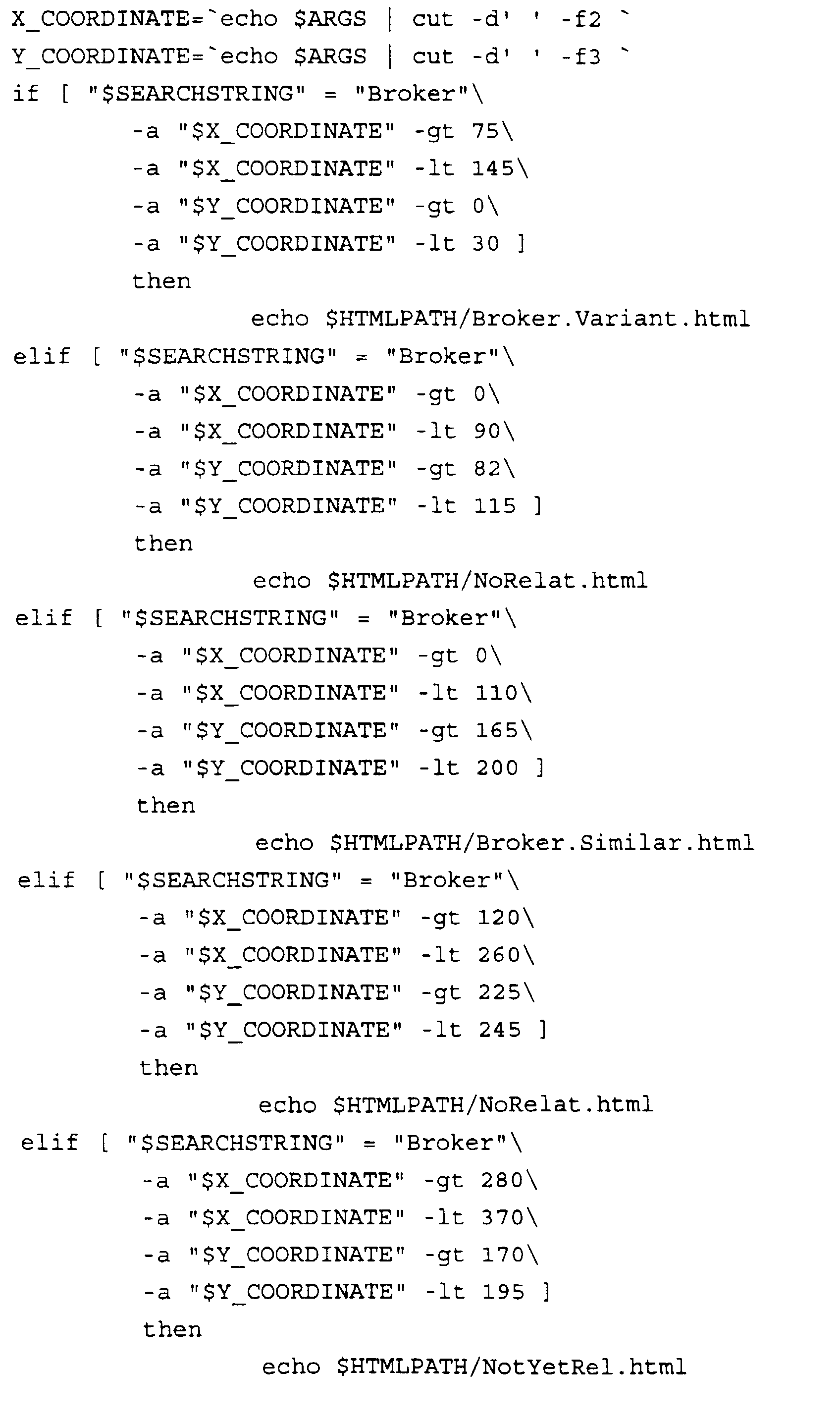

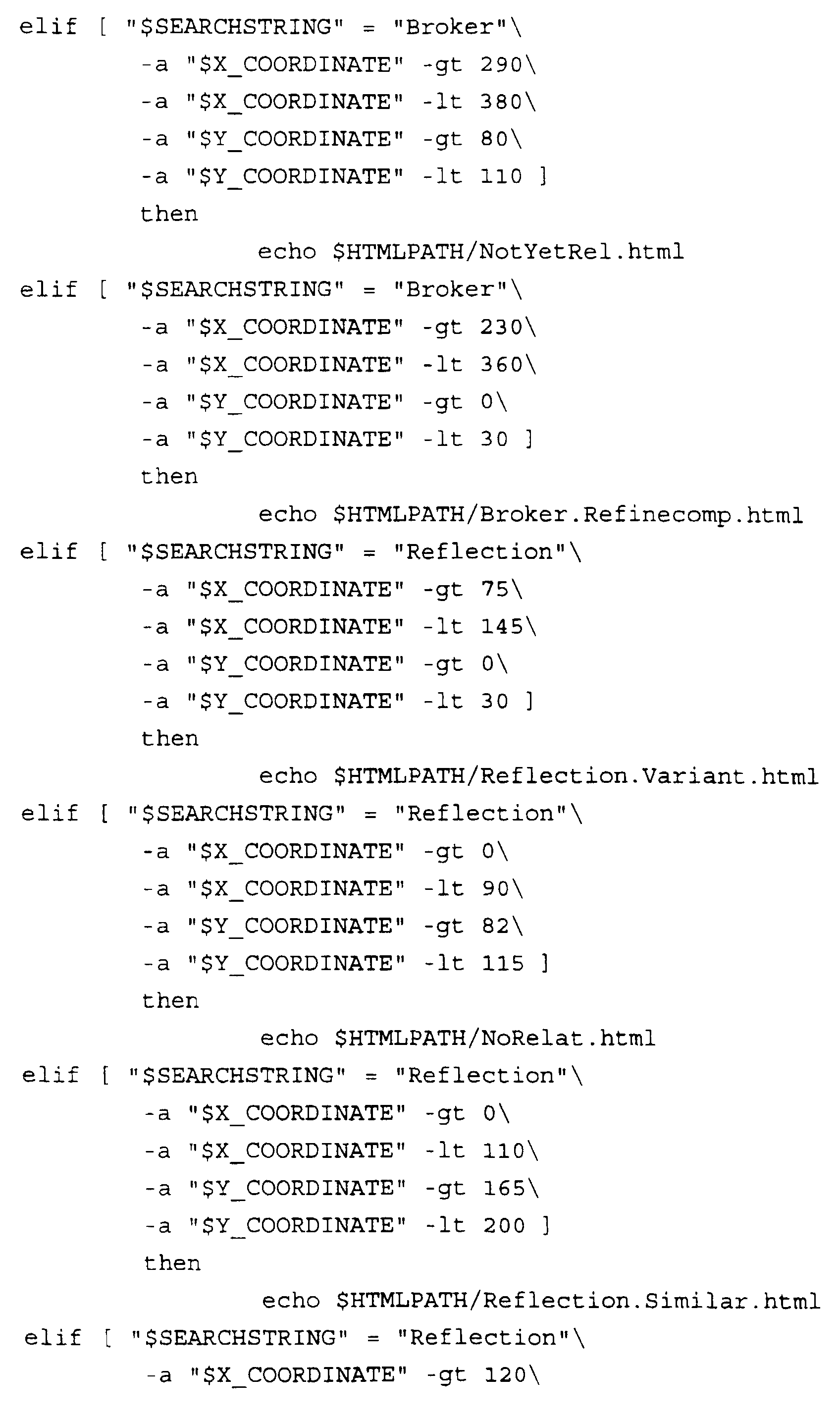

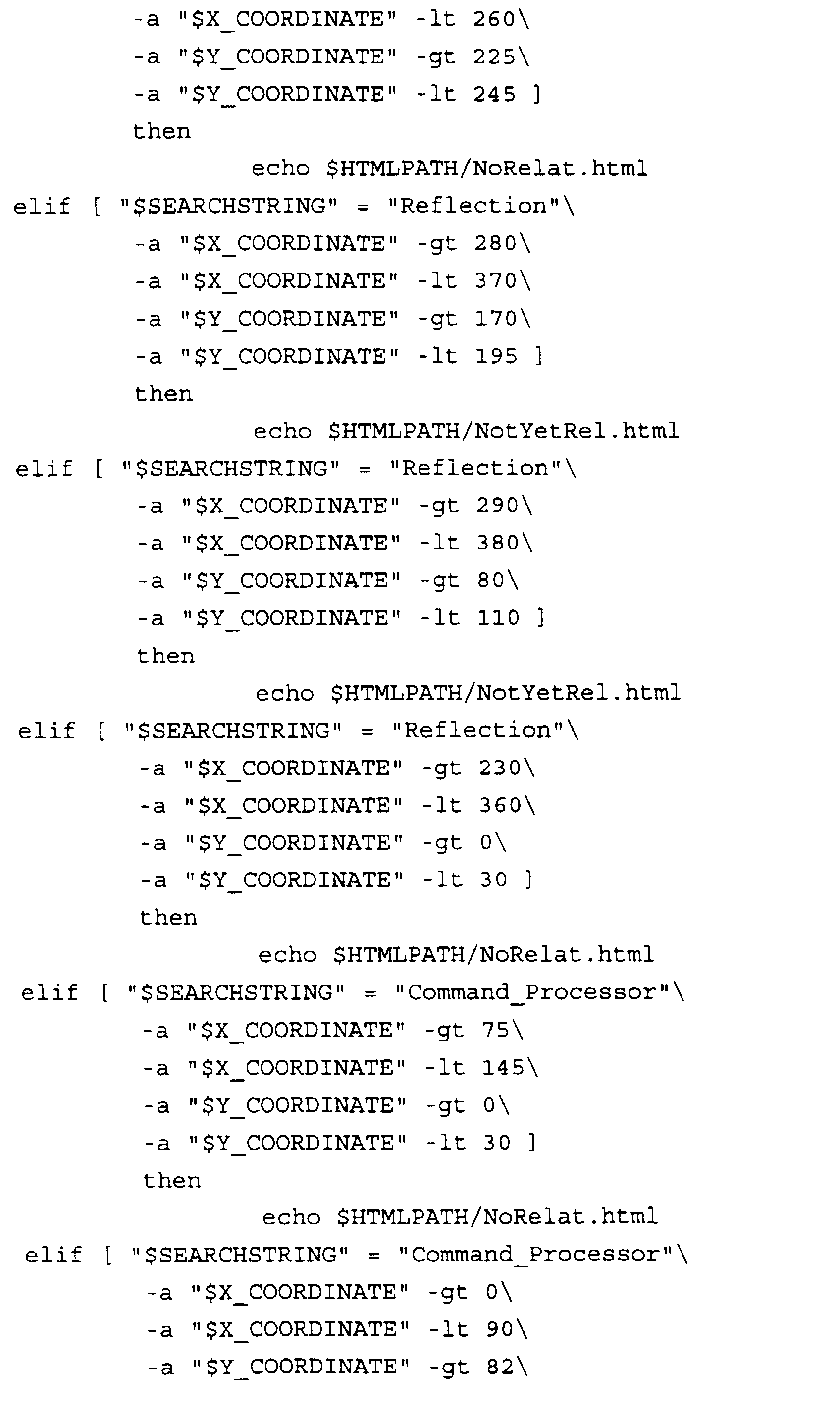

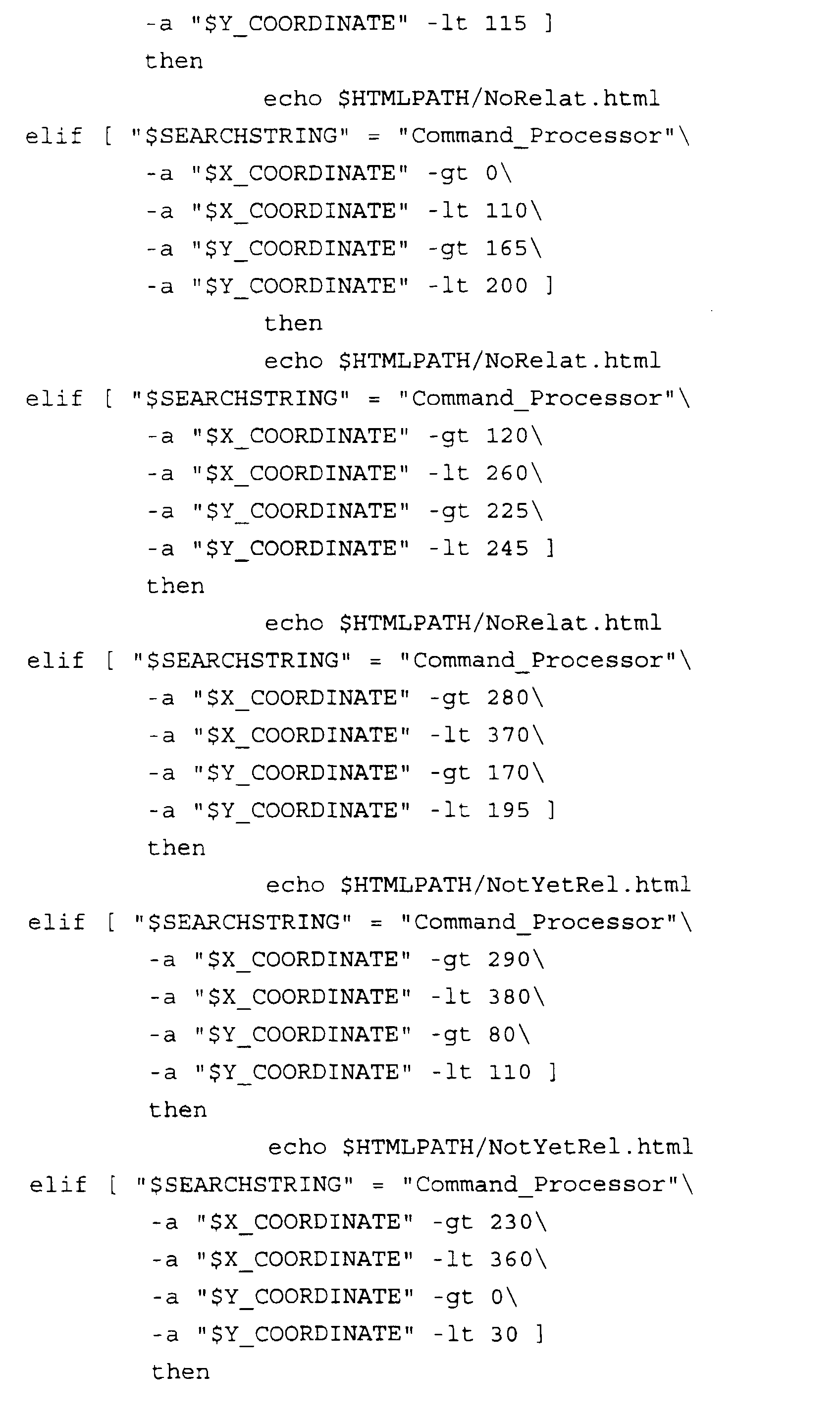

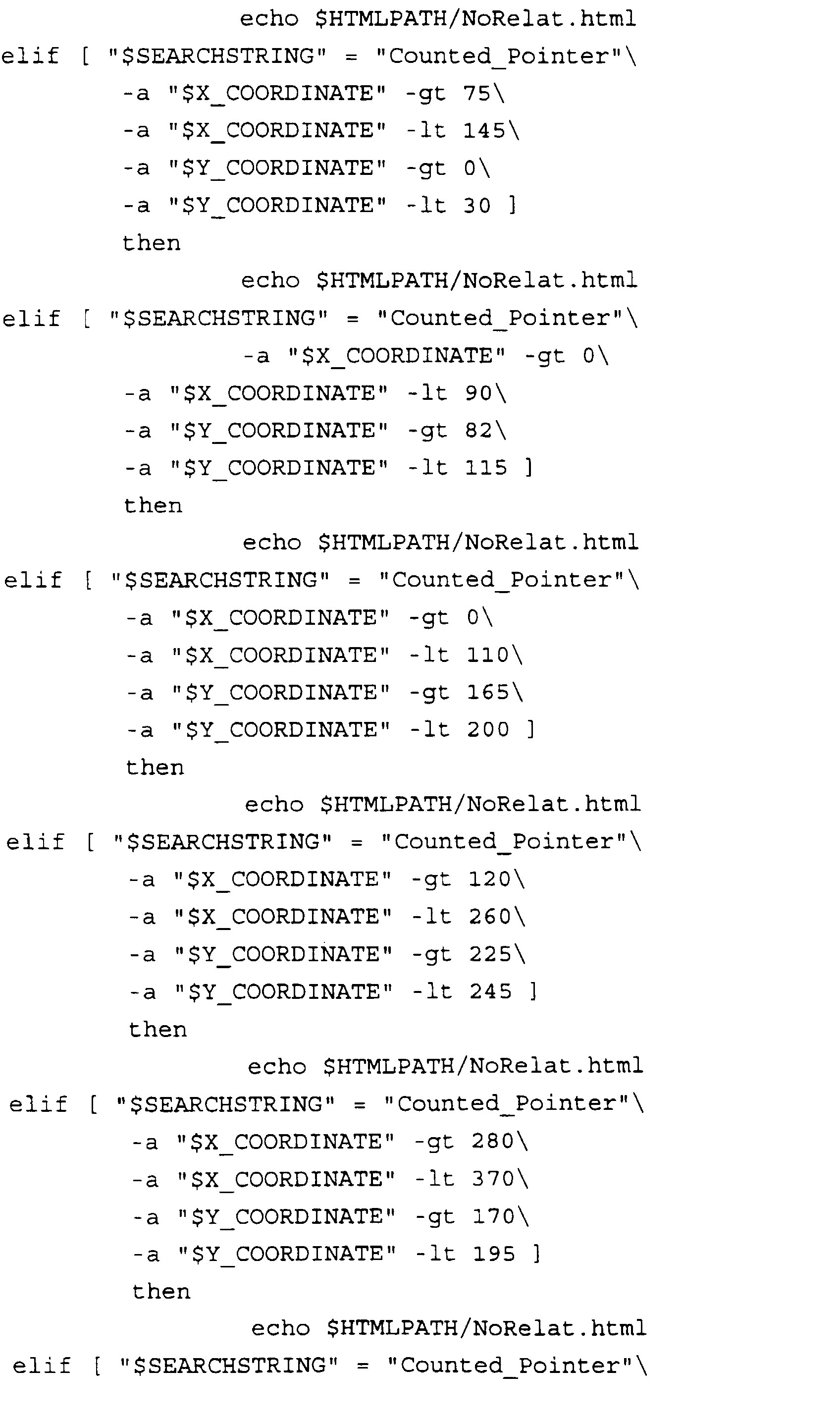

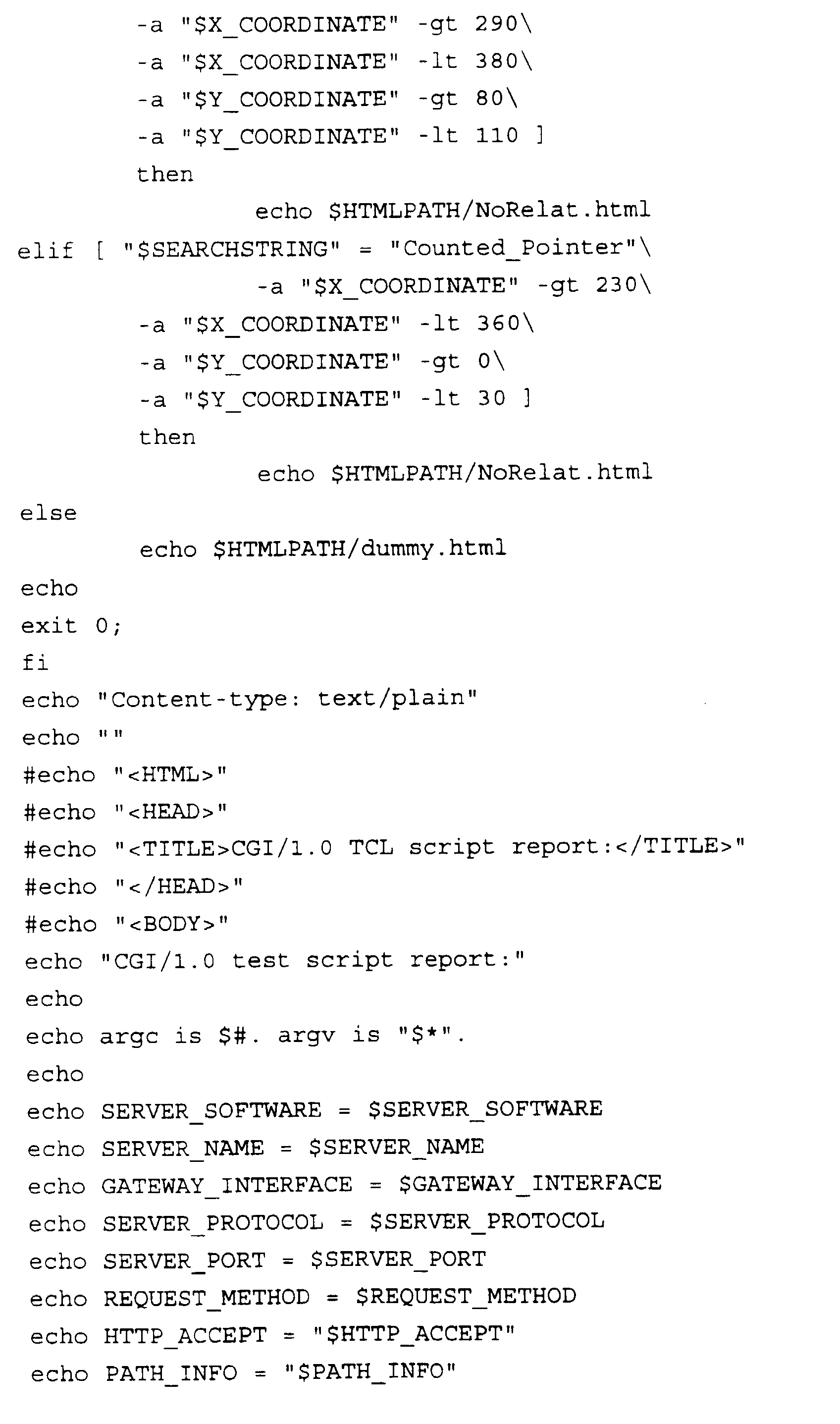

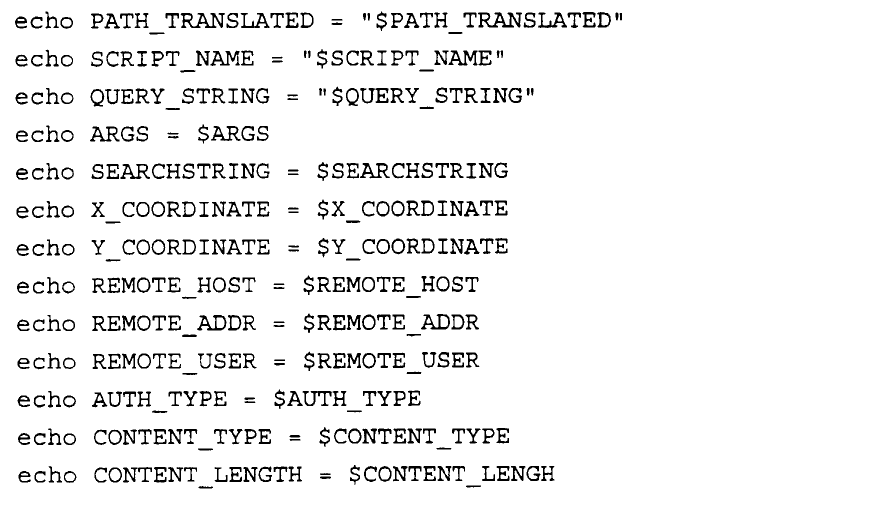

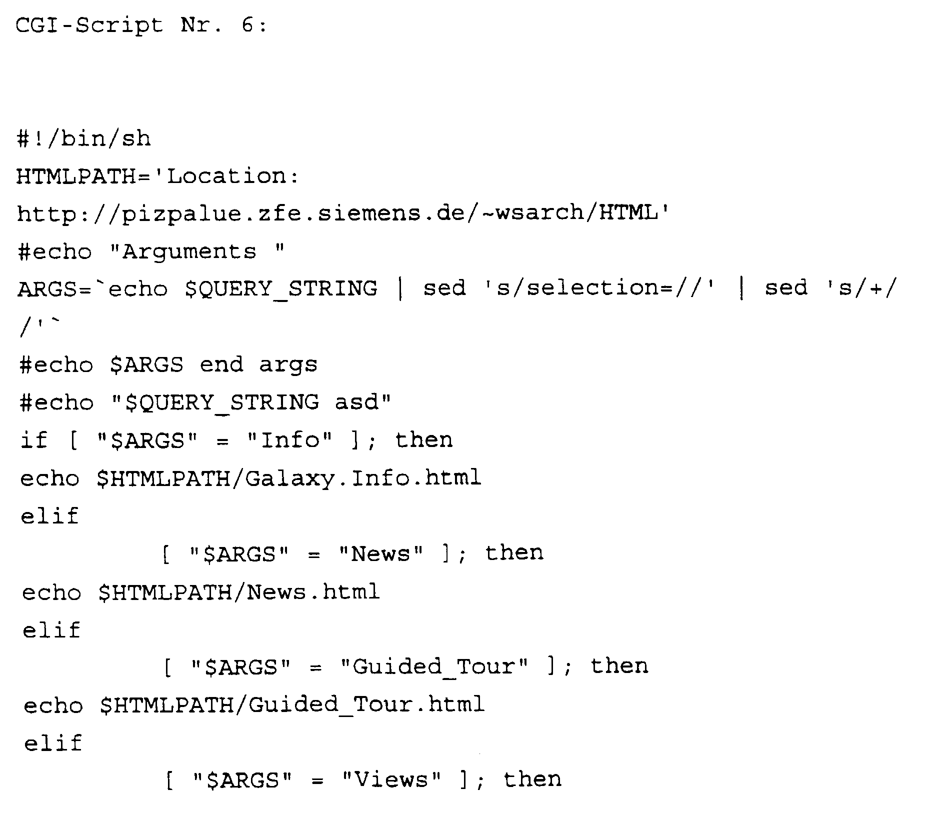

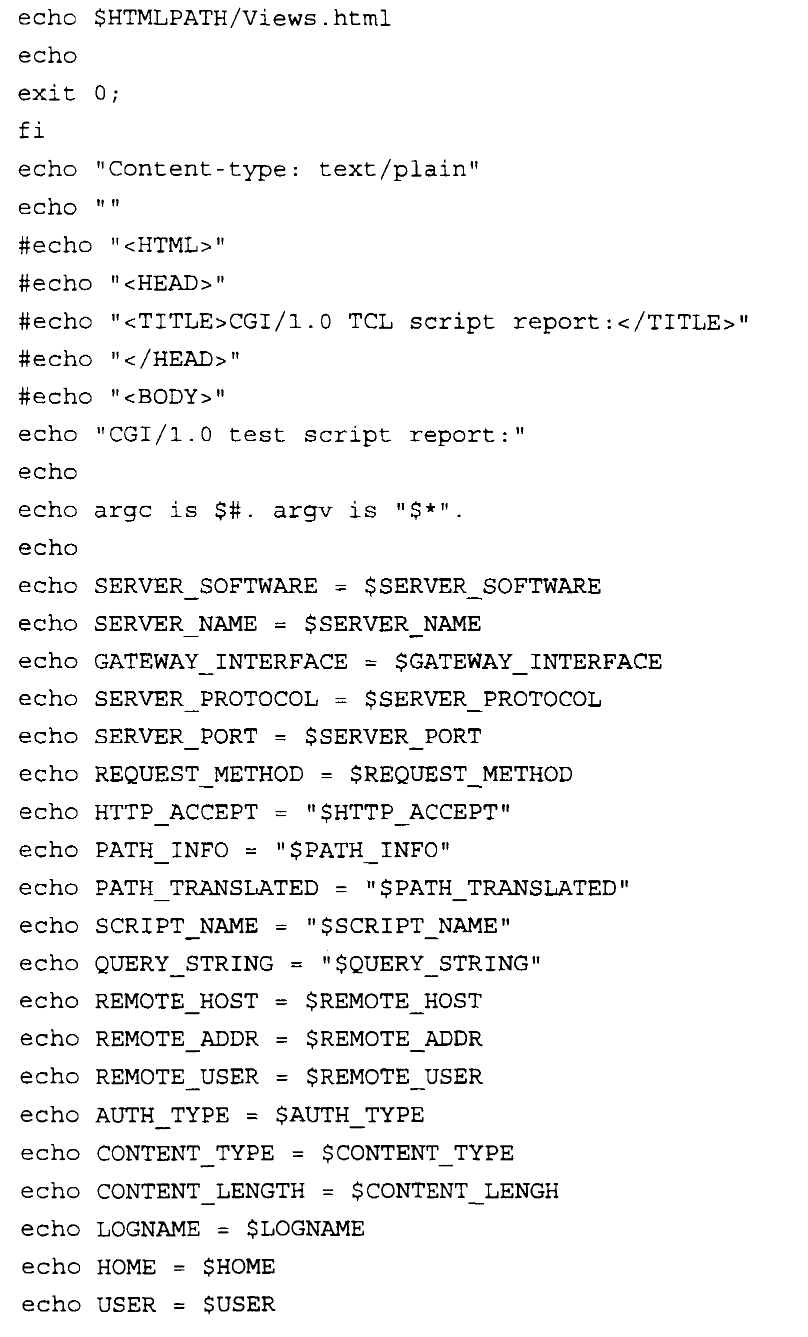

Im Rahmen dieses Dokumentes wurden folgende Veröffentlichungen zitiert:
[1] T. Berners-Lee et al, The World Wide Web, Communications of the ACM, Vol. 37, No. 8, August 1994, S. 76 bis 82
[2] U. Schmitz, Wegweisend - Auffahrt zum Daten-Highway, iX, No. 12, 1994, S. 42 bis 50
[3] F. Buschmann, A System of Patterns, John Wiley & Sons, Inc., ISBN 0-471-95869-7, 1996
[4] I. S. Graham, HTML Sourcebook, John Wiley & Sons, Inc., ISBN 0-471-11849-4, S. 1 bis 7, 1995

## Patentansprüche

1. Verfahren zum Aufteilen mindestens eines elektronischen Dokuments (Di, i=1..m) für ein Netzwerkinformationssystem (NIS) mit Hilfe eines Rechners,
- bei dem mindestens ein Anwendungsaspekt (Al, l=1..n) für das mindestens eine elektronische Dokument (Di) bestimmt wird (301),
- bei dem das mindestens eine elektronische Dokument (Di) unter Berücksichtigung des mindestens einen Anwendungsaspekts (Al) in mehrere elektronische Teildokumente (Tij, j=1..k) aufgeteilt wird (302),
- bei dem die elektronischen Teildokumente (Tij) gespeichert werden (303),
- bei dem Zuordnungen zwischen dem mindestens einen Anwendungsaspekt (Al) und den elektronischen Teildokumenten (Tij) definiert werden (304), und
- bei dem die Zuordnungen gespeichert werden (305).

2. Verfahren nach Anspruch 1, bei dem als das Netzwerkinformationssystem (NIS) das World Wide Web (WWW) vorgesehen wird.

3. Verfahren nach Anspruch 1, bei dem als das Netzwerkinformationssystem (NIS) das WAIS vorgesehen wird.

4. Verfahren nach Anspruch 1, bei dem als das Netzwerkinformationssystem (NIS) das Gopher-System vorgesehen wird.

5. Verfahren nach einem der Ansprüche 1 bis 4, bei dem das elektronische Dokument mindestens ein Software-Entwicklungs-Modell aufweist.

6. Verfahren nach einem der Ansprüche 1 bis 5, bei dem einer des mindestens einen Anwendungsaspekts (Al) durch allgemeine Grundlagen über Software-Entwicklungs-Modelle realisiert wird (502).

7. Verfahren nach Anspruch 5 oder 6, bei dem einer des mindestens einen Anwendungsaspekts (Al) realisiert wird durch Aspekte zum Auffinden bestimmter Software-Entwicklungs-Modelle für ein vorgebbares Entwicklungsproblem (503).

8. Verfahren nach einem der Ansprüche 5 bis 7, bei dem einer des mindestens einen Anwendungsaspekts (Al) realisiert wird durch Zuordnungen von vorgebbaren Begriffen zu den Software-Entwicklungs-Modellen (504).

9. Verfahren nach einem der Ansprüche 5 bis 8, bei dem einer des mindestens einen Anwendungsaspekts (Al) realisiert wird durch Beziehungsaspekte zwischen den Software-Entwicklungs-Modellen (505).

## Claims

1. Computer-assisted method of segmenting at least one electronic document (Di, i=1..m) for a network information system (NIS),
- in which at least one application aspect (Al, l=1..n) is determined for the at least one electronic document (Di) (301),
- in which the at least one electronic document (Di) is segmented into a plurality of electronic part documents (Tij, j=1..k) taking into account the at least one application aspect (Al) (302),
- in which the electronic part documents (Tij) are stored (303),
- in which assignments are defined between the at least one application aspect (Al) and the electronic part documents (Tij) (304), and
- in which the assignments are stored (305).

2. Method according to Claim 1 in which the World Wide Web (WWW) is provided as the network information system (NIS).

3. Method according to Claim 1 in which the WAIS is provided as the network information system (NIS).

4. Method according to Claim 1 in which the Gopher system is provided as the network information system (NIS).

5. Method according to one of Claims 1 to 4 in which the electronic document has at least one software development model.

6. Method according to one of Claims 1 to 5 in which one of the at least one application aspects (Al) is implemented by means of general principles of software development models (502).

7. Method according to Claim 5 or 6 in which one of the at least one application aspect (Al) is implemented by means of aspects for discovering specific software development models for a prescribable development problem (503).

8. Method according to one of Claims 5 to 7 in which one of the at least one application aspect (Al) is implemented by assignments of prescribable terms to the software development models (504).

9. Method according to one of Claims 5 to 8 in which one of the at least one application aspect (Al) is implemented by means of relation aspects between the software development models (505).

## Revendications

1. Procédé de répartition d'au moins un document électronique (Di, i=1 . . m) pour un système d'information de réseau (NIS) à l'aide d'un ordinateur,
- dans lequel au moins un aspect d'application (Al, l=1 . . n) pour le au moins un document électronique (Di) est déterminé (301),
- dans lequel, en tenant compte du au moins un aspect d'application (Al), le au moins un document électronique (Di) est divisé en plusieurs documents électroniques partiels (Tij, j=1 . . k) (302),
- dans lequel les documents électroniques partiels (Tij) sont stockés en mémoire (303),
- dans lequel des correspondances entre le au moins un aspect d'application (Al) et les documents électroniques partiels (Tij) sont définies (304), et
- dans lequel les correspondances sont stockées en mémoire (305).

2. Procédé selon la revendication 1, dans lequel le World Wide Web (WWW) est prévu comme système d'information de réseau (NIS).

3. Procédé selon la revendication 1, dans lequel le WAIS est prévu comme système d'information de réseau (NIS).

4. Procédé selon la revendication 1, dans lequel le système Gopher est prévu comme système d'information de réseau (NIS).

5. Procédé selon l'une des revendications 1 à 4, dans lequel le document électronique comporte au moins un modèle de développement de logiciel.

6. Procédé selon l'une des revendications 1 à 5, dans lequel l'un du au moins un aspect d'application (Al) est réalisé au moyen de bases générales de modèles de développement de logiciel (502).

7. Procédé selon la revendication 5 ou 6, dans lequel l'un du au moins un aspect d'application (Al) est réalisé au moyen d'aspects de recherche de certains modèles de développement de logiciel pour un problème de développement définissable à l'avance (503).

8. Procédé selon l'une des revendications 5 à 7, dans lequel l'un du au moins un aspect d'application (Al) est réalisé au moyen de correspondances entre des termes définissables à l'avance et les modèles de développement de logiciel (504).

9. Procédé selon l'une des revendications 5 à 8, dans lequel l'un du au moins un aspect d'application (Al) est réalisé au moyen d'aspects de corrélation entre les modèles de développement de logiciel (505).
